# EUROPÄISCHE PATENTSCHRIFT

(11) **EP 1 763 464 B1**
(45) Veröffentlichungstag und Bekanntmachung des Hinweises auf die Patenterteilung: **29.09.2010**
(21) Anmeldenummer: 05770243.3
(22) Anmeldetag: 23.06.2005
(51) Int. Cl.: B60T 8/00

(54) **BREMSSYSTEM MIT EBS UND «PREFILL»-FUNKTION SOWIE VERFAHREN ZUR ELEKTRONISCHEN BREMSREGELUNG**
BRAKING SYSTEM WITH EBS AND PREFILL FUNCTION AND ELECTRONIC BRAKING CONTROL METHOD
SYSTEME DE FREINAGE AVEC EBS ET FONCTION DE "PREREMPLISSAGE" AINSI QUE PROCEDE DE REGULATION ELECTRONIQUE DE FREINAGE

(30) Priorität: 24.06.2004 DE 102004030464
(43) Veröffentlichungstag der Anmeldung: 21.03.2007
(73) Patentinhaber: GM Global Technology Operations, Inc., Detroit, MI 48265-3000 (US)
(72) Erfinder: BITZ, Gerd, 55126 Mainz (DE)
(74) Vertreter: Strauss, Peter
(86) Internationale Anmeldenummer: PCT/EP2005/006778
(87) Internationale Veröffentlichungsnummer: WO 2006/000407

(56) Entgegenhaltungen:
- DE-A1- 10 231 555
- DE-A1- 19 607 048
- DE-A1- 19 734 567

## Beschreibung

Die vorliegende Erfindung betrifft ein Bremssystem mit einem Bremspedal oder einer Bremspedal-/Ver-stärker-einheit, einer Hydraulikeinheit mit integriertem elektronischen Regler (kurz: EBS) und einer jeweils einem Rad zugeordneten, hydraulisch betätigbaren Radbremse, nach dem Oberbe-griff des Anspruchs 1, sowie ein Verfahren zur elektronischen Bremsregelung, nach dem Oberbegriff des Anspruchs 2.

Aus der Praxis sind sogenannte konventionelle Bremssysteme bekannt. Diese verfügen in aller Regel über ein Bremspedal oder über eine Bremspedal-/Verstärkereinheit. Weiterhin weisen bekannte konventionelle Bremssysteme eine zentrale Hydraulikeinheit mit integriertem elektronischem Regler (kurz: EBS) auf, wobei die Hydraulikeinheit über eine Pumpe verfügt, um in bestimmten Fällen einen aktiven, vom Fahrer unabhängigen Bremsdruck aufzubauen. Schließlich verfügen derlei Bremssysteme über eine jeweils einem Rad zugeordnete, hydraulisch betätigte Radbremse, welche vorzugsweise eine Bremsscheibe und Bremsbeläge aufweist. Durch Anlegen des von der Pumpe erzeugten Bremsdrucks überwinden die Bremsbeläge ein Lüftspiel und kommen mit der Bremsscheibe in Anlage; die Bremse "greift", ein Bremsvorgang kann eingeleitet werden, bis die Bremse wieder gelöst wird.

Die Radbremsen wie auch die Bremspedal- oder Bremspedal/Verstärkereinheit sind dabei mit der elektronischen Hydraulikeinheit über entsprechende Hydraulikleitungen hydraulisch verbunden. Raddrehzahlsensoren erfassen die Rotationsgeschwindigkeit der Räder. Lenkwinkelsensoren erfassen den Einschlag der Lenkung. Ein häufig im mittleren Bereich des Fahrzeugbodens angeordneter, sogenannter "Sensorcluster" erfasst verschiedene fahrzeugspezifische Daten, wie beispielsweise eine Gierrate oder Querbeschleunigungen. Dabei sind die elektronischen Bauteile über Signal- und/oder Energienetze miteinander verbunden.

Ausgehend von derlei konventionellen Bremssystemen sind Weiterentwicklungen bekannt geworden. Bei sogenannten "elektrohydraulischen Bremsen" (kurz: EHB) ist die hydraulische Verbindung zwischen dem Bremspedal und der zentralen, den Bremsdruck aufbauenden Hydraulikeinheit im normalen Betriebsfall aufgehoben. Statt dessen wird die Betätigung des Bremspedals elektronisch erfasst, der so digitalisierte Verzögerungswunsch des Fahrers wird über eine Datenleitung zur Zentraleinheit der Hydraulikeinheit übermittelt, und in Abhängigkeit von den Bremspedalsignalen wird die Hydraulikeinheit entsprechend angesprochen und aktiviert. Dabei verfügt die Hydraulikeinheit bei derlei modernen elektrohydraulischen Bremssystemen über einen zusätzlichen hydraulischen Druckspeicher. Damit kann ein vom Fahrer angeforderter Bremsdruck schlagartig aufgebaut werden, da dieser bereits im Druckspeicher vorliegt und nicht erst ein Hochlaufen der Pumpe abgewartet werden muß. Mit solchen EHB-Systemen können die Bremsreaktionszeiten quasi gegen Null gedrückt werden. Der Bremsweg lässt sich aufgrund des schnelleren Bremsdruckaufbaus verkürzen. Zudem lässt sich ein verbesserter Komfort und ein angenehmeres Bremspedalgefühl einstellen, da dieses nicht mehr eine hydraulischen Rückkoppelung unterworfen ist, was sich auch in dem bei EHB-Systemen häufig verwendeten Ausdruck "brake by wire" niederschlägt.

Darüber hinaus sind elektromechanische Bremssysteme (kurz: EMB) bekannt geworden. Die elektromechanische Bremse ist die sogenannte Reinform der "brake by wire"-Technik. Es kann dabei völlig auf Bremsflüssigkeit und Hydraulikschläuche verzichtet werden. Hochleistungselektromotoren erzeugen die Bremskräfte direkt an den Rädern. Diese werden von einer elektronischen Regeleinheit gesteuert. Die Betätigung erfolgt über ein elektronisches Bremspedal mit Pedalgefühlsimulator und Sensoren zur Fahrerwunscherkennung.

Jedoch werden bei elektromechanischen Bremssystemen hohe Anforderungen an die elektrische Fahrzeugarchitektur gestellt, speziell an die Bordnetzverfügbarkeit und an die elektrische Energieversorgung.

Dementsprechend besteht der Wunsch, die von "brake by wire" Systemen bekannt gewordenen Verbesserungen und zusätzlichen Funktionalitäten auf konventionelle Bremssysteme, vorzugsweise in Verbindung mit standardmässig eingesetzten elektronischen Stabilitätsprogrammen (kurz: ESP) übertragen zu können, vorzugsweise kostengünstig durch zusätzliche Software und Sensoren, falls erforderlich. Dabei sollen vorzugsweise die aus der EHB bekannten zusätzlichen Funktionen zur Verbesserung der aktiven Fahrsicherheit und des Komforts auch vom ESP übernommen werden können. Aufgrund des unterschiedlichen Systemaufbaus konventioneller und "brake by wire" Bremsen ist dies mit Nachteilen verbunden.

Eine dieser bekannten Funktionen ist die sogenannte "prefill"-Funktion. Mit der "prefill"-Funktion ist das Vorbefüllen der Radbremsen mit einem niedrigen Druck gemeint, bevor der Fahrer das Bremspedal aktiv betätigt. Damit soll das Lüftspiel vor einer Bremsung überwunden werden, so dass der Bremsbelag bereits vor dem Betätigen des Bremspedales an der Bremsscheibe anliegt, um bei einer Bremsung weniger Zeit für den Hub der Bremse und damit für das Aufbauen der wirksamen Bremskraft zu verlieren. Ein gattungsgemäßes Bremssystem ist aus der Offenlegungsschrift DE 19 607 048 A1 bekannt.

Diese "prefill"-Funktion wird bei den elektrohydraulischen Bremsen in Serie erfolgreich angewendet. Dabei wird bei einem schnellen bzw. abrupten Lösen des Gaspedals die Radbremse für einen gewissen Bereitschafts-Zeitraum mit einem niedrigen Druck vorbefüllt und damit die erforderliche Restzeit für das Anlegen der Beläge gegen Null gedrückt, da eine Notbremsung erwartet wird. Der Bereitschafts-Zeitraum der Radbremse, die auf diese Weise für eine Notfallbremsung vorbereitet ist, erstreckt sich hierbei im wesentlichen über die Zeit des abrupten Lösens des Gaspedals bis zum kräftigen Treten des Bremspedals. Dabei nutzt ein EHB-System den Vorteil aus, dass ein erforderlicher Druck vom Druckspeicher bereitgestellt werden kann und nicht von einer Pumpe erzeugt werden muß. Dieser Umstand spricht gegen eine Übertragung der "prefill"-Funktion auf herkömmliche Bremssysteme, da dort derlei Druckspeicher nicht verfügbar sind. Das bedeutet aber, dass die Pumpe bereits beim Lösen des Gaspedales aktiviert werden muss.

Da es sich bei einer elektrohydraulischen Bremse um ein "brake by wire"-System handelt, hat die "prefill"-Funktion keinen Einfluss auf das Pedalgefühl. Letzteres wird vielmehr künstlich simuliert und ist unter Berücksichtigung der "back up"-Funktion frei wählbar. Der auftretende Mehrverbrauch an Kraftstoff aufgrund des Anliegens der Bremsbeläge an der Bremsscheibe hat aufgrund der normalerweise kurzen Zeitdauer keinen nennenswerten negativen Einfluss.

Aufgrund der bei konventionellen Bremsen rein hydraulischen Verbindung der Bremsbetätigung und der Radbremse hat bei konventionellen Bremsen die "prefill"- Funktion einen Einfluss auf das Pedalgefühl. Um mit dieser Funktion das Pedalgefühl zu verbessern, muss bei konventionellen Bremsen der Bremsdruck unbegrenzt beim Lösen des Gaspedales aufgebracht werden, was zu Verbrauchsnachteilen und Bremsenverschleiss führt.

Dementsprechend ist es Aufgabe der vorliegenden Erfindung, unter Vermeidung der vorstehend genannten Nachteile, ein herkömmliches Bremssystem derart zu verbessern, dass die Ansprechzeit der Radbremsen verkürzt und der Bremsweg reduziert werden kann.

Ein weiterer Aspekt ist es, das Pedalgefühl eines damit ausgerüsteten Fahrzeugs zu verbessern, ohne einen nennenswerten Kraftstoffmehrverbrauch und Verschleiß der Bremsen befürchten zu müssen

Ein weiterer Aspekt der Erfindung ist es, ein hierzu geeignetes Verfahren zur elektronischen Bremsregelung anzugeben.

Diese Aufgabe wird gelöst durch die Merkmale des Anspruchs 1, wie auch in verfahrenstechnischer Hinsicht durch die Merkmale des Anspruchs 2.

Dabei wird ein Bremssystem mit einem Bremspedal und/oder einer Bremspedal-/Verstärkereinheit, einer Hydraulikeinheit mit integriertem elektronischem Regler (kurz: EBS) und einer jeweils einem Rad zugeordneten hydraulisch betätigten Radbremse vorgeschlagen, wobei die Radbremsen wie auch das Bremspedal oder die Bremspedal-/Verstärkereinheit mit der elektronischen Hydraulikeinheit über entsprechende Leitungen hydraulisch verbunden sind, mittels welcher ein Bremszylinder der Radbremse entsprechend einer "prefill"-Funktion vorbefüllbar ist, um das Lüftspiel zumindest teilweise zu reduzieren.

Dabei wird erstmals vorgeschlagen, dass das Bremssystem ferner eine Schalteinrichtung aufweist, mittels der die "prefill"-Funktion in Abhängigkeit von einem auswählbaren Betriebsmodus, vorzugsweise automatisch, zu- oder abschaltbar ist.

Weiterhin wird ein Verfahren zur elektronischen Bremsregelung vorgeschlagen, mit einem Bremssystem mit einer Bremspedal- und/oder Verstärkereinheit, einer Hydraulikeinheit mit integriertem elektronischem Regler (kurz: EBS) und einer jeweils einem Rad zugeordneten hydraulisch betätigten Bremse, vorzugsweise mit Bremsscheibe und Bremsbelägen, wobei die Radbremsen wie auch die Bremspedal-/Verstärkereinheit mit der elektronischen Hydraulikeinheit hydraulisch verbunden sind, mittels welcher ein Bremszylinder der Radbremse entsprechend einer "prefill"-Funktion vorgefüllt wird, um das Lüftspiel zu reduzieren.

Hierbei wird erstmals vorgeschlagen, dass die "prefill"-Funktion in Abhängigkeit von einem auswählbaren Betriebsmodus, vorzugsweise automatisch, zu- oder abgeschaltet werden kann.

Durch eine wählbare bzw. gezielte Aktivierung der "prefill"-Funktion bei bestimmten Anwendungen kann der Zusammenhang, zwischen a) verbessertem Pedalgefühl und damit verbundenem erhöhten Kraftstoffverbrauch bei einem schwach erhöhten Reibmoment der Bremse bei gerade ohne Restlüftspiel an der Scheibe anliegenden Bremsbelägen und b) einem für Verbrauchsmessungen relevanten niedrigem Restreibmoment, aufgelöst werden, wobei das Pedalgefühl dem Stand der Technik entspricht.

Die Radbremsen können bezüglich ihrer Restreibmomente zur Verbrauchsminderung weiter optimiert werden und der Einfluss auf das Pedalgefühl kann in der einer oder anderen Schalterstellung eliminiert oder aktiviert werden.

Damit stehen in vorteilhafter Weise die von den elektrohydraulischen Bremsen bekannten Vorzüge des "prefills" auch bei konventionellen Bremssystemen zur Verfügung, ohne dabei irgendwelche Nachteile befürchten zu müssen, wie dies bislang der Fall gewesen wäre.

Die Anwendung der "prefill"-Funktion kann dabei durch eine entsprechende, vorzugsweise automatisch geregelte, Zu- oder Abschaltung beispielsweise durch den Komfort- und/oder Sportschalter getrennt bzw. aktiviert werden. In einer ersten Stellung, beispielsweise der Komfortstellung, bleibt die Funktion entweder gänzlich ausgeschaltet und kommt nur bei einer erwarteten Vollbremsung automatisch zum Einsatz, oder die Vorbefüllung erfolgt mit einem entsprechend niederen Druck, ohne dass dabei das Reibmoment der Radbremse erhöht wird. Dabei wird in vorteilhafter Weise lediglich das Lüftspiel soweit reduziert, dass kein Einfluss auf den Kraftstoffverbrauch entsteht. Lediglich bei einem schnellen Lösen des Gaspedals wird die Radbremse vollständig vorbefüllt, um die Reaktionszeit der Bremse weiter zu reduzieren und damit den Bremsweg zusätzlich weiter zu verkürzen.

Auf diese Weise ist sichergestellt, dass bei einer Komfort-Stellung des Wählschalters die "prefill"-Funktion beschränkt auf Notfälle zur Verfügung steht, also beim abrupten Lösen des Gaspedals und anschließenden heftigen Betätigen der Bremse die Zeitspanne, die der Fahrer benötigt um seinen Fuß vom Gaspedal zu heben und auf das Bremspedal zu stellen bereits mit einer vollständigen Vorbefüllung der Radbremsen überbrückt bzw. ausgenutzt worden ist, so dass die Radbremsen dann in einem schneller ansprechendem Zustand sind, wenn das Bremspedal getreten wird.

Darüber hinaus ist sichergestellt, dass bei einer Komfort-Stellung die "prefill"-Funktion bei einem normalen Anheben oder Lösen des Gaspedals und/oder einem schwachen Treten des Bremspedals nicht aktiviert wird, so dass keinerlei Mehrverbrauch aufgrund eines evtl. vorzeitig erhöhten Bremsreibmoments entstehen kann und auch kein zusätzlicher Verschleiß der Bremsen befürchtet werden muß. Zudem bleibt damit ein maximaler Rollkomfort beim ruhigen Dahingleiten mit dem Fahrzeug oder beim vorausschauenden Mitschwimmen im Verkehrsfluß erhalten.

Demgegenüber kann in einer zweiten Stellung, beispielsweise einer sogenannten Sportstellung, die "prefill"-Funktion permanent zugeschaltet sein. Dabei kann der Druck wahlweise, vorzugsweise automatisch, zusätzlich entsprechend erhöht werden. Damit ist sichergestellt, dass die Bremsen bei jedem Bremsvorgang sofort ein schnelles Ansprechen zur Verfügung stellen können, so dass ein sportliches Fahren auch bei der Bremspedalcharakteristik unterstützt wird.

Durch die wählbare Trennung oder Aktivierung der "prefill"-Funktion können die Vorteile dieser "prefill"-Funktion angewendet werden, ohne gleichzeitig deren aus dem Stand der Technik bekannten Nachteile in Kauf nehmen zu müssen.

In einer Komfortstellung, in der beispielsweise Ausrollversuche für Verbrauchsmessungen oder dergleichen im Felde durchgeführt werden, sind die Restreibmomente der Bremse gegenüber einer gelösten Bremse nicht erhöht, da die "prefill"-Funktion noch nicht aktiv ist oder zwar aktiv ist aber noch nicht so viel Druck aufbaut, dass ein Bremsbelag bereits an der Bremsscheibe anliegen würde. In der Sportfunktion wiederum wird die "prefill-Funktion derart zugeschaltet und ggf. der Druck zusätzlich erhöht, dass sich - neben einem verbesserten Pedalgefühl, welches sich dann sozusagen "härter" bzw. "knackiger" anfühlt -, durch Eliminierung des Lüftspiels bis zum Anlegen der Bremsscheiben an den Bremsbelägen, ein möglichst schnelles Angreifen der Bremsen einstellen lässt. Entsprechend den vom Fahrer gewählten oder vom System automatisch eingestellten Schaltstellungen hat das Bremspedal dann eine unterschiedliche Bremscharakteristik. Die Anwendung der "prefill" Funktion beim schnellen Lösen des Gaspedales in einem Zeitfenster ist dabei unabhängig von der Schalterstellung und damit automatisch ohne Fahrereinfluss anwendbar.

Vorteilhafte Weiterbildungen der Erfindung ergeben sich aus den Merkmalen der Unteransprüche.

So ist in einer bevorzugten Ausführungsform des Verfahrens vorgesehen, dass als Betriebsmodus ein Komfort- oder ein Sportmodus ausgewählt wird. Ferner könnte ein sogenannter verbrauchsoptimierter Modus oder auch ein Langstreckenmodus eingestellt werden. Dabei lassen sich je nach Anwendungsfall und gewähltem Modus die vom Bremssystem erzeugbaren Drücke im Radbremszylinder ggf. vollautomatisch derart vorwählen bzw. einstellen, dass einerseits ein Lüftspiel reduziert und andererseits dieses jedoch nicht soweit reduziert wird, dass es zu Null werden würde, sondern ein ganz geringes Restlüftspiel zwischen Bremsbelag und Scheibe verbleibt. Dieses ist dabei so abgestimmt, dass der restliche zu überwindende Bremshub vom Zeitfenster her dem Zeitbedarf entspricht, den ein durchschnittlicher Fahrer benötigt, um den Fuß vom Gaspedal zu heben und auf die Bremse zu setzen. Damit steht in jedem Anwendungsfall ein für eine Notbremsung sofort einsatzbereites Bremssystem zur Verfügung. Verzögerungen in der Reaktionszeit sind reduziert und Bremswege werden minimiert.

In einer weiter bevorzugten Ausführungsform des Verfahrens ist vorgesehen, dass die "prefill"-Funktion zeitlich begrenzt aktivierbar ist. Dies bietet den Vorteil, dass die bei herkömmlichen Bremssystemen zum Teil nur zeitlich begrenzt verfügbare Pumpleistung der Hydraulikeinheit, nicht über einen zu langen Zeitraum angefordert wird, so dass eine Überlastung einer solchen herkömmlichen Hydraulikeinheit vorteilhaft ausgeschlossen werden kann. Dabei läßt sich ein akzeptabler Kompromiss zwischen Verfügbarkeit einer "prefill"-Funktion und Belastbarkeit der Hydraulikpumpe einstellen.

Einer weiter bevorzugten Ausführungsform zufolge ist vorgesehen, dass der Bremszylinder mit einem Anfangsbremsdruck vorbefüllbar ist, welcher kleiner ist als der zur Ausführung einer Bremsung erforderliche Bremsdruck. Damit ist sichergestellt, dass der Bremsbelag noch nicht vollständig an der Bremsscheibe anliegt, gleichwohl schon ein Lüftspiel überwunden ist. Auf diese Weise ist die Bremse maximal bremsbereit und gleichzeitig wird immer noch ein unerwünschter Bremsverschleiß vermieden. Dies hilft einerseits die Sicherheit zu erhöhen und andererseits die Betriebskosten in einem minimalen Rahmen zu halten.

In einer weiter bevorzugten Ausführungsform ist vorgesehen, dass der durch die "prefill"-Funktion an der Radbremse anliegende, vorbefüllte Druck ein Lüftspiel zwischen der Bremsscheibe und dem Bremsbelag näherungsweise gegen Null ausgleicht, vorzugsweise schon einen ganz schwachen Druck auf der Bremsscheibe aufbaut. Dies stellt z.B. bei einem Sportmodus sicher, dass eine ohnehin etwas sportlichere bzw. zügigere Fahrweise, die auch häufig ein heftigeres Bremsen verlangt, dann auch auf eine entsprechend aktivierte bzw. bremsbereite Bremse trifft.

Entsprechend einer weiter bevorzugten Ausführungsform ist vorgesehen, dass die Bremsregelung Teil einer Fahrdynamikregelung mit einem elektronischen Stabilitätsprogramm (kurz: ESP) ist. Damit lassen sich die vom ESP bekannten Vorteile in synergetischer Weise auf eine konventionelle Bremse, die um die vorteilhafte "prefill"-Funktion verbessert ist, anwenden, so dass sich weitere Vorteile im Zusammenspiel ergeben.

Dabei ist in vorteilhafter Weise vermieden, dass ein direkter hydraulischer Durchtritt bei einer Optimierung der Bremse bezüglich Restreibmomente einen negativen Einfluss auf das Pedalgefühl hat. Das Auslösen der "prefill"-Funktion kann mit dem Lösen des Gaspedals erfolgen. Damit ist diese an einem Zeitfenster orientiert, welches ausreicht, um ein Reibmoment der Bremse aufzubauen, noch nicht aufgrund der zeitlichen Begrenzung zu erhöhtem Verbrauch führt, und zugleich die von der Aktivierungszeitdauer limitierten herkömmlichen ESP-Pumpen nicht überfordert.

Dabei kann bei einer Schaltstellung "Komfort" dafür gesorgt werden, dass die "prefill"-Funktion nur beim schnellen Lösen des zugeschaltet wird, ansonsten ausgeschaltet bleibt. Dies bietet den Vorteil einer Verkürzung des Bremsweges sowie eines geringen Restreibmomentes der Bremse, exakt dann, wenn es darauf ankommt, so dass kein zusätzlicher Verbrauch feststellbar ist. Normverbrauchsmessungen werden in dieser Schalterstellung durchgeführt. Demgegenüber kann in einer Schaltstellung "Sport" die "prefill"-Funktion immer, d.h. permanent zugeschaltet sein, also auch bei einem normalen Lösen und nicht nur bei einem schnellen Lösen des Gaspedals. Dies bietet neben der Verkürzung des Bremsweges eine Verbesserung des als sportlich empfundenen Pedalgefühles, wobei mit der Aktivierung der Schalterstellung "Sport" ein Mehrverbrauch an Kraftstoff akzeptiert wird.

Die vorstehend diskutierte Erfindung schafft damit erstmals ein verbessertes konventionelles Bremssystem mit einer Bremspedal- und/oder Verstärkereinheit, einer Hydraulikeinheit mit integriertem elektronischem Regler (kurz: EBS) und einer jeweils einem Rad zugeordneten hydraulisch betätigten Radbremse, vorzugsweise mit Bremsscheibe und Bremsbelägen. Dabei sind die Radbremsen wie auch die Bremspedal-/Verstärkereinheit mit der elektronischen Hydraulikeinheit hydraulisch verbunden. Mittels dieser ist ein Bremszylinder der Radbremse entsprechend einer "prefill"-Funktion vorbefüllbar, um das Lüftspiel zumindest teilweise zu reduzieren. Dabei soll erstmals das Bremssystem ferner eine Schalteinrichtung aufweisen, mittels der die "prefill"-Funktion in Abhängigkeit von einem auswählbaren Betriebsmodus zu- oder abschaltbar ist. Darüber hinaus schlägt die vorstehend diskutierte Erfindung ein Verfahren zur elektronischen Bremsregelung mit einem solchen Bremssystem vor.

## Patentansprüche

1. Bremssystem mit einer Bremspedal-/Verstärkereinheit, einer Hydraulikeinheit mit integriertem elektronischem Regler (kurz: EBS) und einer jeweils einem Rad zugeordneten hydraulisch betätigten Radbremse, vorzugsweise mit Bremsscheibe und Bremsbelägen, wobei die Radbremsen wie auch die Bremspedal-/Verstärkereinheit mit der elektronischen Hydraulikeinheit hydraulisch verbunden sind, mittels welcher ein Bremszylinder der Radbremse entsprechend einer "prefill"-Funktion vorbefüllbar ist, um das Lüftspiel zumindest teilweise zu reduzieren, **dadurch gekennzeichnet, dass** das Bremssystem ferner eine Schalteinrichtung aufweist, mittels der die Anwendung der "prefill"-Funktion in Abhängigkeit von einem auswählbaren Betriebsmodus, vorzugsweise automatisch, aktivierbar oder trennbar ist.

2. Verfahren zur elektronischen Bremsregelung mit einem Bremssystem mit einer Bremspedal-/Verstärkereinheit, einer Hydraulikeinheit mit integriertem elektronischem Regler (kurz: EBS) und einer jeweils einem Rad zugeordneten hydraulisch betätigten Radbremse, vorzugsweise mit Bremsscheibe und Bremsbelägen, wobei die Radbremsen wie auch die Bremspedal-/Verstärkereinheit mit der elektronischen Hydraulikeinheit hydraulisch verbunden sind, mittels welcher ein Bremszylinder der Radbremse entsprechend einer "prefill"-Funktion vorbefüllt wird, um das Lüftspiel zumindest teilweise zu reduzieren, **dadurch gekennzeichnet, dass** die Anwendung der "prefill"-Funktion in Abhängigkeit von einem auswählbaren Betriebsmodus, vorzugsweise automatisch, aktiviert oder getrennt werden kann.

3. Verfahren nach Anspruch 2, **dadurch gekennzeichnet, dass** die "prefill"-Funktion zeitlich begrenzt aktivierbar ist.

4. Verfahren nach einem der Ansprüche 2 bis 3, **dadurch gekennzeichnet, dass** der Bremszylinder mit einem Anfangsbremsdruck vorbefüllbar ist, welcher kleiner ist, als der zur Ausführung einer Bremsung erforderliche Bremsdruck.

5. Verfahren nach einem der Ansprüche 2 bis 4, **dadurch gekennzeichnet, dass** der durch die "prefill"-Funktion an der Radbremse anliegenden vorbefüllte Druck ein Lüftspiel zwischen der Bremsscheibe und dem Bremsbelag näherungsweise zu Null ausgleicht.

6. Verfahren nach einem der Ansprüche 2 bis 5, **dadurch gekennzeichnet, dass** die Bremsregelung Teil einer Fahrdynamikregelung mit einem elektronischen Stabilitätsprogramm (kurz: ESP) ist.

7. Verfahren nach einem der Ansprüche 2 bis 6, **dadurch gekennzeichnet, dass** die Bremsregelung Teil einer Integrierten Chassis Regelung (kurz: ICC) ist.

## Claims

1. A braking system having a brake pedal/booster unit, a hydraulic unit having integrated electronic control (abbreviation: EBS), and a hydraulically operated wheel brake assigned to each wheel, preferably having brake disc and brake linings, the wheel brakes and also the brake pedal/booster unit being hydraulically connected to the electronic hydraulic unit, by means of which a brake cylinder of the wheel brake is pre-fillable according to a "pre-fill" function, in order to at least partially reduce the air gap, **characterized in that** the brake system also has a switch apparatus, by means of which the application of the "pre-fill" function is activatable or disconnectable, preferably automatically, as a function of a selectable operating mode.

2. A method for electronic brake regulation using a brake system having a brake pedal/booster unit, a hydraulic unit having integrated electronic control (abbreviation: EBS), and a hydraulically operated wheel brake assigned to each wheel, preferably having brake disc and brake linings, the wheel brakes and also the brake pedal/booster unit being hydraulically connected to the electronic hydraulic unit, by means of which a brake cylinder of the wheel brake is pre-fillable according to a "pre-fill function", in order to at least partially reduce the air gap, **characterized in that** the application of the "pre-fill" function can be activated or disconnected, preferably automatically, as a function of a selectable operating mode.

3. The method according to Claim 2, **characterized in that** the "pre-fill function" is activatable in a time-limited manner.

4. The method according to one of Claims 2 to 3, **characterized in that** the brake cylinder is pre-fillable using an initial brake pressure, which is less than the brake pressure required for executing braking.

5. The method according to one of Claims 2 to 4, **characterized in that** the pre-filled pressure applied to the wheel brake by the "pre-fill" function compensates for an air gap between the brake disc and the brake lining approximately to zero.

6. The method according to one of Claims 2 to 5, **characterized in that** the brake control is part of a vehicle dynamics control having an electronic stability program (abbreviation: ESP).

7. The method according to one of Claims 2 to 6, **characterized in that** the brake control is part of an integrated chassis control (abbreviation: ICC).

## Revendications

1. Système de freinage avec une unité de pédale de frein et de servofrein, une unité hydraulique avec régulateur hydraulique intégré (abréviation : EBS) et un frein de roue à actionnement hydraulique associé à chaque roue, de préférence avec disque de frein et garnitures de frein, les freins de roue ainsi que l'unité de pédale de frein et de servofrein étant reliés de façon hydraulique à l'unité hydraulique électronique au moyen de laquelle un cylindre de frein du frein de roue peut être rempli selon une fonction de « pré-remplissage » pour réduire au moins partiellement le jeu du frein, **caractérisé en ce que** le système de freinage comporte en outre un dispositif de commutation au moyen duquel l'utilisation de la fonction de « pré-remplissage » peut être activée ou coupée en fonction d'un mode de fonctionnement sélectionnable, de préférence de façon automatique.

2. Procédé de régulation électronique du freinage avec un système de freinage avec une unité de pédale de frein et de servofrein, une unité hydraulique avec régulateur hydraulique intégré (abréviation : EBS) et un frein de roue à actionnement hydraulique associé à chaque roue, de préférence avec disque de frein et garnitures de frein, les freins de roue ainsi que l'unité de pédale de frein et de servofrein étant reliés de façon hydraulique à l'unité hydraulique électronique au moyen de laquelle un cylindre de frein du frein de roue peut être rempli selon une fonction de « pré-remplissage » pour réduire au moins partiellement le jeu du frein, **caractérisé en ce que** le système de freinage comporte en outre un dispositif de commutation au moyen duquel l'utilisation de la fonction de « pré-remplissage » peut être activée ou coupée en fonction d'un mode de fonctionnement sélectionnable, de préférence de façon automatique.

3. Procédé selon la revendication 2, **caractérisé en ce que** la fonction de « pré-remplissage » peut être activée de manière limitée dans le temps.

4. Procédé selon l'une des revendications 2 à 3, **caractérisé en ce que** le cylindre de frein peut être pré-rempli à une pression de freinage initiale qui est inférieure à la pression de freinage nécessaire pour exécuter un freinage.

5. Procédé selon l'une des revendications 2 à 4, **caractérisé en ce que** la pression de pré-remplissage exercée sur le frein de roue par la fonction de « pré-remplissage » compense un jeu du frein entre le disque de frein et la garniture de frein jusqu'à approximativement zéro.

6. Procédé selon l'une des revendications 2 à 5, **caractérisé en ce que** la régulation du freinage fait partie d'une régulation de la dynamique de traction avec un programme de stabilité électronique (abréviation : ESP).

7. Procédé selon l'une des revendications 2 à 6, **caractérisé en ce que** la régulation du freinage fait partie d'une régulation intégrée du châssis (abréviation : ICC).
